# EUROPEAN PATENT APPLICATION

(11) **EP 4 831 015 A1**
(43) Date of publication of application: **28.10.2026**
(21) Application number: 25172440.7
(22) Date of filing: 24.04.2025
(51) Int. Cl.: B60S 1/38

(54) **WINDSHIELD WIPER CONNECTION SEAT**

(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(57) **Abstract**

A windshield wiper connection seat (1) includes: a connection seat (10) having a seat member (11) and an accessory unit (12), the seat member (11) has an accommodation space (100), a first pivotal connection part (13) and a first position part (14), the seat member (11) has a plurality of support parts (15); a metal elastic sheet (20) disposed on the support parts (15) and extended along two sides of the seat member (11); and a press unit (30) having a plate member (31), a second pivotal connection part (32) and a second position part (33), the press unit (30) is moveably combined with the seat member (11) through the two pivotal connection parts (32, 13), and is positioned in the accommodation space (100) through the two position parts (33, 14). Accordingly, the metal elastic sheet (20) is prevented from being released from the connection seat (10).

## Description

### BACKGROUND OF THE DISCLOSURE

### Technical Field

The present disclosure relates to a windshield wiper, especially to a windshield wiper connection seat.

### Description of Related Art

A related-art windshield wiper applied on a vehicle is disposed at an outer side of a windshield of the vehicle. The windshield wiper is connected to a drive arm of the vehicle to make the windshield wiper be driven by the drive arm to repeatedly swing on the windshield, thus foreign objects, for example rainwater or dusts, are removed.

In the design of the related-art windshield wiper structure, the type and the specification of the windshield wiper drive arm are different due to various vehicle manufacturers and the vehicle types. Moreover, a specified connection seat matched with the windshield wiper drive arm with different designs is required for the purpose of connecting and fastening a scrapping strip. Furthermore, the connection seat with a different specification requires a different positioning manner, thus the manner for connecting the scrapping strip is altered. As such, the assembling process of the windshield wiper is complicated and inconvenient in actual practices.

Accordingly, the applicant of the present disclosure has devoted himself for improving the mentioned shortages.

### SUMMARY OF THE DISCLOSURE

The present disclosure provides a windshield wiper connection seat, which has advantages of simplifying an assembling manner of a connection seat and a metal elastic sheet and being more convenient in actual practices.

Accordingly, the present disclosure provides a windshield wiper connection seat, which includes a connection seat, a metal elastic sheet and a press unit. The connection seat includes a seat member and an accessory unit. The seat member has an accommodation space, a first pivotal connection part and a first position part disposed in seat member. The seat member has a plurality of support parts disposed in the accommodation space. The accessory unit is disposed on the seat member, and has a combination part connected to a drive arm. The metal elastic sheet is disposed on the support parts and extended along two sides of the seat member. The press unit includes a plate member, a second pivotal connection part and a second position part disposed on the plate member. The press unit is moveably combined with the seat member through the second pivotal connection part and the first pivotal connection part being mutually and pivotally connected. The press unit is positioned in the accommodation space through the second position part and the first position part being mutually positioned. As such, the metal elastic sheet is positioned and pressed, and the metal elastic sheet is prevented from being released from the connection seat.

According to one embodiment of the present disclosure, the first pivotal connection part is a pivotal connection hole, and the second pivotal connection part is a pivotal shaft.

According to one embodiment of the present disclosure, the first position part is a hook, and the second position part is a latch slot.

According to one embodiment of the present disclosure, the first pivotal connection part and the first position part are disposed on a lateral wall of the seat member and located at the same side of the seat member.

According to one embodiment of the present disclosure, the second pivotal connection part and the second position part are disposed at two opposite ends of the plate member.

According to one embodiment of the present disclosure, the press unit includes a pull rod, and the second position part is formed on the pull rod.

According to one embodiment of the present disclosure, the press unit has an opened slot located between the pull rod and the plate member to make the pull rod have an elastically deforming force.

According to one embodiment of the present disclosure, the press unit includes a block sheet vertically extended from the plate member, and the block sheet is horizontally extended between the second pivotal connection part and the second position part.

According to one embodiment of the present disclosure, the windshield wiper connection seat further includes a pair of flow guiding covers, the pair of flow guiding covers allows the metal elastic sheet to be disposed, and the pair of flow guiding covers is combined at opposite sides of the connection seat.

According to one embodiment of the present disclosure, the windshield wiper connection seat further includes a scrapping strip set, and the scrapping strip set is disposed at a bottom side of the metal elastic sheet.

In comparison with related art, the present disclosure has advantageous features as follows. The windshield wiper connection seat of the present disclosure includes the press unit. One end of the press unit is pivotally connected to an inner side of the connection seat to make the press unit rotate relative to the connection seat. Another end of the press unit is positioned on the connection seat to make the press unit be moveably disposed on the connection seat. One side of the metal elastic sheet penetrates a penetrated slot of the connection seat, and another side of the metal elastic sheet is pressed by the press unit. Accordingly, the metal elastic sheet is prevented from being released from the connection seat. When a force is applied to the press unit to make the press unit be released from the connection seat, and the press unit rotates towards a direction away from the connection seat, the metal elastic sheet is no longer blocked by the block sheet, thus the metal elastic sheet is detached from the connection seat. Accordingly, the assembling manner of the connection seat and the metal elastic sheet is simplified to be applicable in the connection seat with different specifications, and the operation is more convenient.

### BRIEF DESCRIPTION OF THE DRAWINGS

FIG. 1 is a perspective view showing the assembly of the windshield wiper connection seat according to the present disclosure;
FIG. 2 and FIG. 3 are perspective exploded views showing the windshield wiper connection seat according to the present disclosure;
FIG. 4 is a cross sectional view showing the assembly of the windshield wiper connection seat according to the present disclosure; and
FIG. 5 to FIG. 7 are schematic views showing the operating statuses of the windshield wiper connection seat according to the present disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

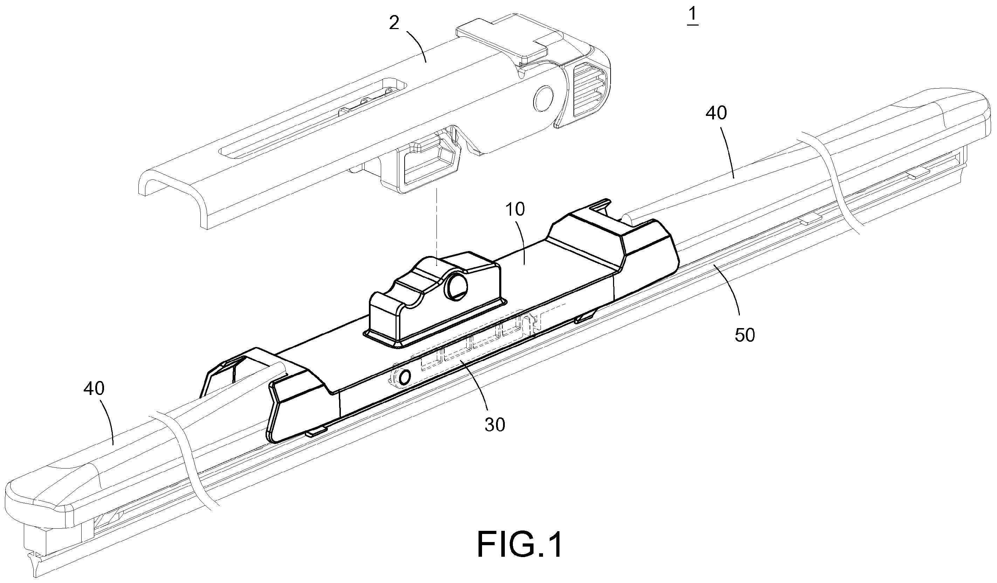

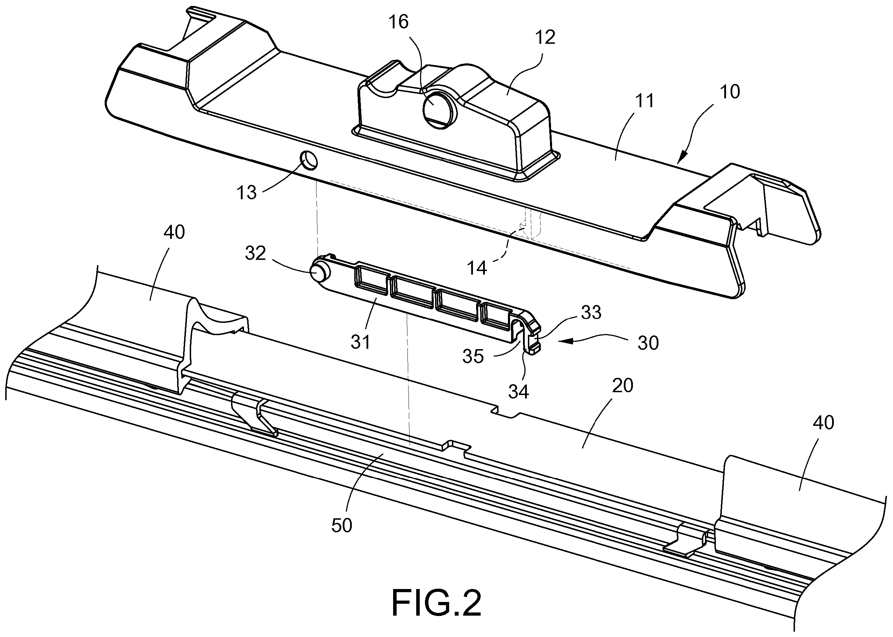

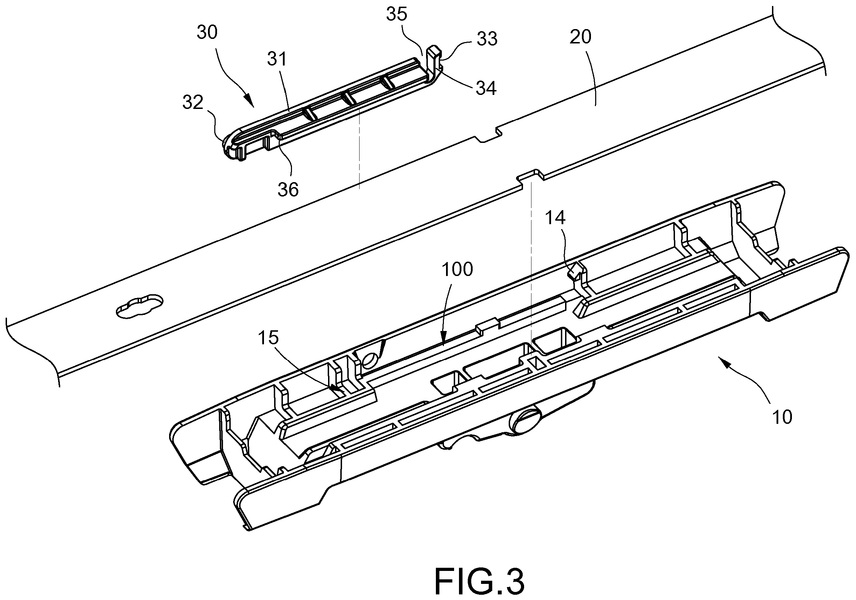

Please refer from FIG. 1 to FIG. 3, wherein FIG. 1 is a perspective view showing the assembly of the windshield wiper connection seat according to the present disclosure; and FIG. 2 and FIG. 3 are perspective exploded views showing the windshield wiper connection seat according to the present disclosure. The present disclosure provides a windshield wiper connection seat 1, which includes a connection seat 10, a metal elastic sheet 20 and a press unit 30. The metal elastic sheet 20 is disposed at a bottom side of the connection seat 10. The press unit 30 is pivotally connected to the connection seat 10 to press the metal elastic sheet 20, thus the metal elastic sheet 20 is combined with the connection seat 10 and prevented from being released from the connection seat 10.

The windshield wiper connection seat 1 further includes a pair of flow guiding covers 40 and a scrapping strip set 50. The pair of flow guiding covers 40 allows the metal elastic sheet 20 to be disposed (inserted), and the pair of flow guiding covers 40 is combined at opposite sides of the connection seat 10. The scrapping strip set 50 is disposed at a bottom side of the metal elastic sheet 20. As such, the connection seat 10 is combined with a drive arm 2. The drive arm 2 drives the windshield wiper connection seat 1 to repeatedly swing. Detailed illustrations for the windshield wiper connection seat 1 are as follows.

The connection seat 10 includes a seat member 11 and an accessory unit 12. The seat member 11 has an accommodation space 100, a first pivotal connection part 13 and a first position part 14 both disposed in seat member 11. The seat member 11 has a plurality of support parts 15 disposed in the accommodation space 100. The accessory unit 12 is disposed on the seat member 11, and has a combination part 16 connected to the drive arm 2.

The metal elastic sheet 20 is disposed on the support parts 15 of the connection seat 10, and extended along two sides of the seat member 11. The press unit 30 includes a plate member 31, a second pivotal connection part 32 and a second position part 33 both disposed on the plate member 31. The press unit 30 is moveably combined with the seat member 11 through the second pivotal connection part 32 and the first pivotal connection part 13 being mutually and pivotally connected. The press unit 30 is positioned in the accommodation space 100 through the second position part 33 and the first position part 14 being mutually positioned. As such, the metal elastic sheet 20 is pressed, and the metal elastic sheet 20 is prevented from being released from the connection seat 10.

In some embodiments, the first pivotal connection part 13 is a pivotal connection hole. The second pivotal connection part 32 is a pivotal shaft. The first position part 14 is a hook. The second position part 32 is a latch slot 33. Specifically, the first pivotal connection part 13 and the first position part 14 are disposed on a lateral wall of the seat member 11 and located at the same side of the seat member 11. The second pivotal connection part 32 and the second position part 33 are disposed at two opposite ends of the plate member 31.

Specifically, the press unit 30 includes a pull rod 34. The second position part 33 is formed on the pull rod 34. The press unit 30 has an opened slot 35 located between the pull rod 34 and the plate member 31 to make the pull rod 34 have an elastically deforming force. The press unit 30 includes a block sheet 36 vertically extended from the plate member 31. The block sheet 36 is horizontally extended between the second pivotal connection part 32 and the second position part 33 to block the metal elastic sheet 20.

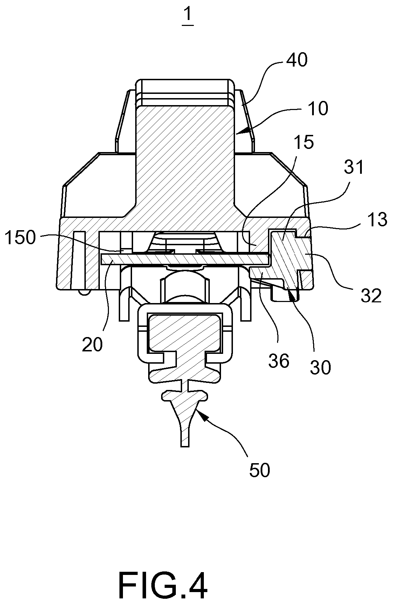

Please refer to FIG. 4, which is a cross sectional view showing the assembly of the windshield wiper connection seat according to the present disclosure. The metal elastic sheet 20 of the present disclosure is disposed on the support parts 15 of the connection seat 10. The scrapping strip set 50 is disposed at the bottom side of the metal elastic sheet 20. The press unit 30 is pivotally connected to and positioned at an inner side of the seat member 10 via the second pivotal connection part 32, and the press unit 30 has the block sheet 36.

What shall be addressed are as follows. The support part 15 of the connection seat 10 has a penetrated slot 150. One side of the metal elastic sheet 20 penetrates the penetrated slot 150, and another side of the metal elastic sheet 20 is blocked by the block sheet 36. As such, the metal elastic sheet 20 is prevented from being released from the connection seat 10.

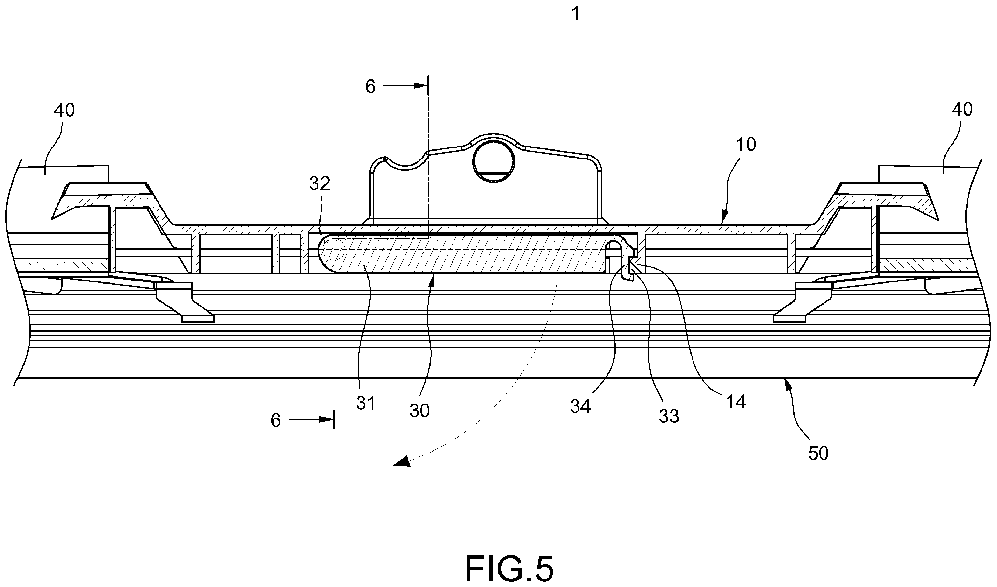

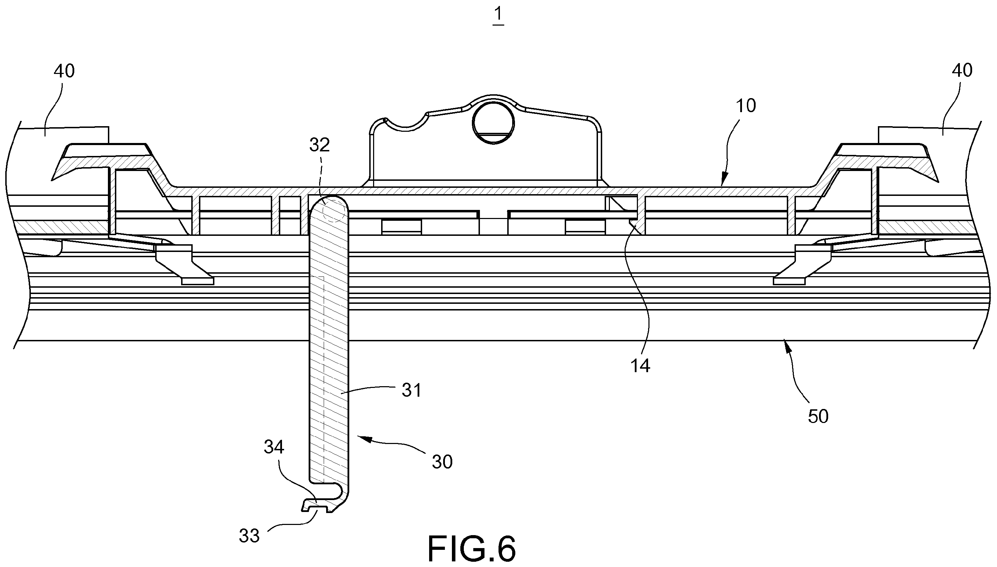

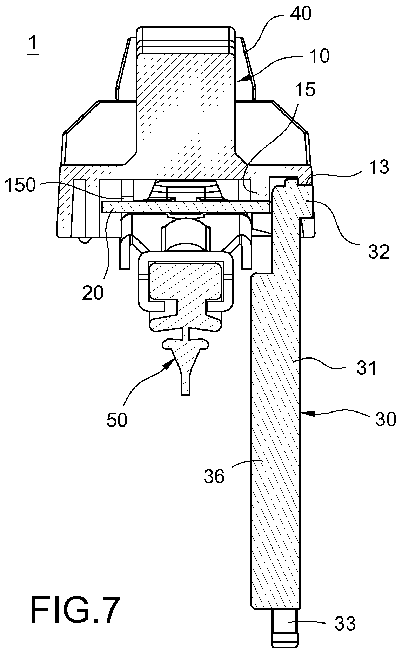

Please refer from FIG. 5 to FIG. 7, which are schematic views showing the operating statuses of the windshield wiper connection seat according to the present disclosure. The press unit 30 of the present disclosure is combined with the seat member 11 through the second pivotal connection part 32 (the pivotal shaft) and the first pivotal connection part 13 (the pivotal connection hole) of the connection seat 10 being mutually and pivotally connected, thus the press unit 30 rotates relative to the connection seat 10. The press unit 30 is positioned in the accommodation space 100 through the second position part 33 (the latch slot) and the first position part 14 (the hook) being mutually latched and positioned, thus the metal elastic sheet 20 is blocked and pressed.

What shall be addressed are as follows. When a force is applied to the pull rod 34 of the press unit 30 to make the pull rod 34 deform, the second position part 33 (the latch slot) is released from the first position part 14 (the hook), one side of the press unit 30 rotates towards a direction away from the connection seat 10. Accordingly, the metal elastic sheet 20 is no longer blocked by the block sheet 36, and the metal elastic sheet 20 is detached from the connection seat 10.

## Claims

1. A windshield wiper connection seat (1), comprising:
a connection seat (10), comprising a seat member (11) and an accessory unit (12), wherein the seat member (11) comprises an accommodation space (100), a first pivotal connection part (13) and a first position part (14) both disposed therein, and a plurality of support parts (15) disposed in the accommodation space (100), and the accessory unit (12) is disposed on the seat member (11) and comprises a combination part (16) connected to a drive arm (2);
a metal elastic sheet (20), disposed on the support parts (15) and extended along two sides of the seat member (11); and
a press unit (30), comprising a plate member (31), a second pivotal connection part (32) and a second position part (33) both disposed on the plate member (31), wherein the press unit (30) is moveably combined with the seat member (11) through the second pivotal connection part (32) and the first pivotal connection part (13) being pivotally connected with each other, and is positioned in the accommodation space (100) through the second position part (33) and the first position part (14) being positioned with each other, and the press unit (30) is configured to press the metal elastic sheet (20) to prevent the metal elastic sheet (20) from being released from the connection seat (10).

2. The windshield wiper connection seat (1) according to claim 1, wherein the first pivotal connection part (13) is a pivotal connection hole, and the second pivotal connection part (32) is a pivotal shaft.

3. The windshield wiper connection seat (1) according to claim 1, wherein the first position part (14) is a hook, and the second position part (33) is a latch slot.

4. The windshield wiper connection seat (1) according to claim 1, wherein the first pivotal connection part (13) and the first position part (14) are disposed on a lateral wall of the seat member (11) and located at a same side of the seat member (11).

5. The windshield wiper connection seat (1) according to claim 1, wherein the second pivotal connection part (32) and the second position part (33) are disposed at two ends of the plate member (31) opposite to each other.

6. The windshield wiper connection seat (1) according to claim 1, wherein the press unit (30) comprises a pull rod (34), and the second position part (33) is disposed on the pull rod (34).

7. The windshield wiper connection seat (1) according to claim 6, wherein the press unit (30) comprises an opened slot (35) located between the pull rod (34) and the plate member (31) to make the pull rod (34) be elastically deformable.

8. The windshield wiper connection seat (1) according to claim 1, wherein the press unit (30) comprises a block sheet (36) vertically extended from the plate member (31), and the block sheet (36) is horizontally extended between the second pivotal connection part (32) and the second position part (33).

9. The windshield wiper connection seat (1) according to claim 1, further comprising a pair of flow guiding covers (40), wherein the metal elastic sheet (20) is inserted in the pair of flow guiding covers (40), and the pair of flow guiding covers (40) is combined at two sides of the connection seat (10) opposite to each other.

10. The windshield wiper connection seat (1) according to claim 1, further comprising a scrapping strip set (50), wherein the scrapping strip set (50) is disposed at a bottom side of the metal elastic sheet (20).
